# DEMANDE DE BREVET EUROPEEN

(11) **EP 4 160 336 A2**
(43) Date de publication de la demande: **05.04.2023**
(21) Numéro de dépôt: 22197616.0
(22) Date de dépôt: 26.09.2022
(51) Int. Cl.: G05B 19/418, B25J 9/16, B25J 9/00, B25J 5/00

(54) **MOYENS AUTOMATISÉS DE GESTION ET DE CONFIGURATION D'UN PARC DE ROBOTS INDUSTRIELS**

(30) Priorité: 01.10.2021 FR 2110414
(71) Demandeur: B & S Robsim, 67500 Haguenau (FR)
(72) Inventeur: Schnelldorfer, Bodo, 67500 HAGUENAU (FR)
(74) Mandataire: Bugnion Genève

(57) **Abrégé**

Il est proposé des moyens automatisés pour gérer le positionnement d'un parc de robots industriels, dans un site industriel comportant un ensemble de dispositifs d'accueil répartis sur une pluralité de stations. Chaque dispositif d'accueil est arrangé de sorte à permettre l'accueil d'un des robots industriels du parc et le maintien dudit robot industriel dans une position adaptée à la réalisation des tâches susceptibles d'être assignées audit robot industriel dans la station correspondante. Chaque robot industriel comporte un dispositif de stockage de l'énergie apte à fournir de manière autonome l'énergie nécessaire au fonctionnement nominal dudit robot industrie. Les moyens automatisés sont configurés pour :
• recevoir une requête, comportant une information indiquant un besoin pour le déploiement, sur un des dispositifs d'accueil de destination, d'un des robots industriels parmi les robots industriels du parc) ;
• sélectionner un des robots industriels du parc, dont le dispositif de stockage d'énergie dispose de ressources énergétiques propres supérieures ou égales à une quantité minimale nécessaire aux robots industriels pour être déployé ;
• transmettre, à un robot mobile présent dans le site industriel, un ordre pour déplacer le robot industriel sélectionné vers le dispositif d'accueil de destination.

## Description

### DOMAINE TECHNIQUE ET ART ANTERIEUR

La présente invention concerne notamment des moyens automatisés de gestion et de configuration d'un parc de robots industriels, adaptés à être déployés dans un site industriel.

Dans un site industriel typique, il est d'usage de répartir, entre les diverses stations d'une ligne de production, des robots fixes effectuant chacun une séquence de tâches bien spécifiques. Ainsi, les robots sont configurés individuellement et sont maintenus dans cet état, aussi longtemps que nécessaire pour mener à bien leur mission productive, et ainsi éviter autant que possible les tâches fastidieuses et complexes d'initialisation et de reprogrammations des robots nécessaires après chaque mise hors fonctionnement ou chaque changement de station.

Si cette approche peut convenir à des sites industriels de taille intermédiaire à importante, le manque d'adaptabilité et les investissements nécessaires se révèlent problématiques dans de nombreuses autres configurations, en particulier pour des sites de taille plus réduite ou nécessitant des redéploiements fréquents.

En effet, à chaque événement ou changement nécessitant le déplacement et/ou remplacement d'un ou plusieurs robots, il est nécessaire d'une part de planifier et réaliser de lourdes tâches de manutention, et d'autre part d'initialiser et de configurer à nouveau chaque robot, individuellement, selon des programmes spécifiques.

De plus, lorsque l'usage régulier d'un même robot sur plusieurs stations de la ligne de production pourrait être envisagé, de sorte à réduire notamment les coûts, cette possibilité est vite écartée, car jugée trop complexe et risquée.

Il est connu, par exemple du document de brevet WO 2020/074147 A1, de mettre en œuvre des systèmes robotiques modulaires dans lesquels une plateforme mobile est configurée pour transporter des unités robotiques jusqu'à un poste de travail d'un site industrielle. Ces moyens sont toutefois peu adaptés pour gérer efficacement des unités robotiques pourvues de leur propre batteries, et ne propose qu'une gestion
de configuration sommaire en ce qui concerne le déploiement des unités robotiques et leur mise en service.

C'est pourquoi il existe un besoin pour fournir des moyens automatisés de gestion et de configuration d'un parc de robots industriels, adaptés à être déployés dans un site industriel, et aptes à permettre l'usage partagé d'un même robot industriel entre plusieurs stations.

### EXPOSÉ DE L'INVENTION

Un objet de l'invention est de fournir des moyens pour l'usage d'un même robot industriel entre plusieurs stations d'une ou plusieurs lignes de production d'un site industriel.

Un objet de l'invention est de fournir des moyens permettant, à un robot industriel, d'être déployé sur une première station de travail d'une chaîne d'assemblage pour réaliser une première tâche, ce même robot pouvant par la suite être redéployé, dans une deuxième configuration, sur une deuxième station de la même chaîne d'assemblage ou d'une autre chaîne d'assemblage, pour réaliser une deuxième tâche.

Un objet de l'invention est de fournir des moyens pour permettre le partage des capacités offertes par un même robot entre diverses stations de travail, et s'adapter ainsi à diverses cadences de production.

Un objet de l'invention est de fournir des moyens susceptibles de réduire les coûts par rapport à l'usage d'un robot industriel statique sur chaque station de production du site.

Un ou plusieurs de ces objets sont remplis par le procédé selon le premier aspect, le procédé selon le deuxième aspect, le module selon le troisième aspect, le robot selon le quatrième aspect, et le système selon le cinquième aspect. Les revendications dépendantes fournissent en outre des solutions à ces objets et/ou d'autres avantages.

Dans la présente demande, on désigne par le terme station un emplacement dans un site industriel à partir duquel une tâche ou une séquence de tâches sont susceptibles d'être réalisées. Par exemple, dans une ligne de production, les stations décrivent une pluralité d'emplacements à partir desquels un processus de production est mis en œuvre, typiquement par l'intervention d'un ouvrier, d'une machine et/ou un robot.

De même, on emploie le terme « autonome » en lien avec les ressources énergétiques d'un dispositif pour indiquer que ce dernier n'a pas nécessité à être constamment alimenté en énergie par un dispositif ou une infrastructure externe, pour remplir sa fonction, bien que cette possibilité ne soit pas exclue.

À cet effet, selon un premier aspect, il est proposé un procédé de gestion du positionnement d'un parc de robots industriels, dans un site industriel comportant un ensemble de dispositifs d'accueil répartis sur une pluralité de stations. Chaque dispositif d'accueil est arrangé de sorte à permettre l'accueil d'un des robots industriels du parc et le maintien dudit robot industriel dans une position adaptée à la réalisation des tâches susceptibles d'être assignées audit robot industriel dans la station correspondante. Chaque robot industriel comporte un dispositif de stockage de l'énergie apte à fournir de manière autonome l'énergie nécessaire au fonctionnement nominal dudit robot industriel. Le procédé comporte les étapes suivantes :
- une première étape de réception d'une requête, comportant une information indiquant un besoin pour le déploiement, sur un des dispositifs d'accueil de destination, d'un des robots industriels parmi les robots industriels du parc ;
- une deuxième étape de sélection d'un des robots industriels du parc, dont le dispositif de stockage d'énergie dispose de ressources énergétiques propres supérieures ou égale à une quantité minimale nécessaire aux robots industriels pour être déployé ;
- une troisième étape de transmission, à un robot mobile présent dans le site industriel, d'un ordre pour déplacer le robot industriel sélectionné vers le dispositif d'accueil de destination.

Le robot industriel disposant de ressources énergétiques suffisantes, il est possible de déplacer ce dernier au sein du site, jusqu'à sa destination, sans mettre hors tension ce dernier, et ainsi préserver les informations stockées dans le robot industriel, telles que les informations d'initialisation, les programmes pour exécuter différentes tâches, etc. En outre, l'usage de robots mobiles permet d'effectuer les principales tâches de manutention de manière automatisée et fiable, ne nécessitant pas d'intervention significative de la part d'opérateurs. Enfin, le procédé est efficace, car il est possible de gérer efficacement les cycles de charge des robots industriels.

Au cours de la deuxième étape, on peut identifier les robots industriels du parc dont le dispositif de stockage d'énergie dispose de ressources énergétiques propres inférieures à la quantité minimale, puis transmettre auxdits robots industriels un ordre de recharge et/ou une demande de remplacement du dispositif de stockage de l'énergie. Il est ainsi possible de gérer efficacement les cycles de charges des robots industrielles, et réduire leur indisponibilité.

Dans un mode de réalisation, une pluralité de robots mobiles étant présente dans le site industriel, on identifie, parmi la pluralité de robots mobiles, un desdits robots mobiles étant à la fois le plus proche du robot industriel sélectionné au cours de la deuxième étape, disponible et disposant des ressources énergétiques nécessaires pour déplacer le robot industriel sélectionné vers le dispositif d'accueil de destination identifié au cours de la première étape. L'ordre pour déplacer le robot industriel sélectionné vers le dispositif d'accueil de destination est alors transmis au cours de la troisième étape audit robot mobile identifié au cours de l'étape d'identification. Il est ainsi possible de gérer efficacement une flotte de robots mobiles, en attribuant la tâche de transporter le robot industriel au robot mobile le plus à même de réaliser cette tâche de manière optimale, à savoir le robot mobile disponible suffisamment chargé le plus proche. Il est ainsi possible d'utiliser les robots mobiles à d'autres tâches que le transport des robots industriels, notamment le transport d'objets tels des palettes ou des cartons, et ainsi d'optimiser encore les coûts et la flexibilité. Au cours de l'étape d'identification, on peut identifier les robots mobiles ne disposant pas des ressources énergétiques nécessaires pour déplacer le robot industriel sélectionné vers le dispositif d'accueil de destination, et puis transmettre auxdits robots mobiles un ordre de recharge et/ou de maintenance. Il est ainsi possible de gérer efficacement les cycles de charges des robots mobiles, et réduire les indisponibilités des robots mobiles.

Selon un deuxième aspect, il est proposé un procédé de configuration automatisée d'un robot industriel, apte à coopérer avec un dispositif d'accueil installé à une station d'un site industriel. Chaque dispositif d'accueil est arrangé de sorte à permettre l'accueil du robot industriel et le maintien dudit robot industriel dans une position adaptée à la réalisation des tâches susceptible d'être assignées audit robot industriel dans la station correspondante. Chaque robot industriel comporte un dispositif de stockage de l'énergie apte à fournir de manière autonome l'énergie nécessaire au fonctionnement nominal dudit robot industriel. Le procédé comporte les étapes suivantes :
- une première étape de réception d'un signal S_{D} de démarrage, transmis par un dispositif d'accueil ;
- une deuxième étape de détermination d'un identifiant propre au dispositif d'accueil ayant transmis le signal S_{D} de démarrage ;
- une troisième étape de sélection et de chargement d'un programme pour l'exécution d'une séquence de tâches à réaliser, parmi un ensemble de programmes pour l'exécution de séquences de tâches, en fonction de l'identifiant propre au dispositif d'accueil.

Ainsi la configuration du robot industriel peut être automatisée et adaptée, dès son couplage au dispositif d'accueil. L'ensemble de programmes pour l'exécution de séquences de tâches peut par exemple comporter divers programmes adaptés à chaque dispositif d'accueil du site, et ainsi permettre d'adapter la séquence de tâches aux spécificités de la station correspondant au dispositif d'accueil. Le robot industriel disposant de ressources énergétiques suffisantes, il est possible d'initialiser automatiquement ce dernier à son arrivée à destination.

Selon un troisième aspect, il est proposé un module automate adapté à mettre en œuvre le procédé selon le premier aspect.

Selon un quatrième aspect, il est proposé un robot industriel adapté à mettre en œuvre le procédé selon le deuxième aspect.

Selon un cinquième aspect, il est proposé un système comportant au moins un module automate selon le troisième aspect, et au moins un robot industriel selon le quatrième aspect.

Selon un sixième aspect, l'invention se rapporte à un programme d'ordinateur comportant des instructions pour l'exécution des étapes du procédé selon le premier aspect ou selon le deuxième aspect, lorsque ledit programme est exécuté par un processeur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. 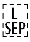 En particulier, il est possible d'utiliser le langage C/C++, le langage Java^{™}, des langages de script, tels que notamment tcl, JavaScript, python, Perl qui permettent une génération de code « à la demande » et ne nécessitent pas de surcharge significative pour leur génération ou leur modification.

Selon un septième aspect, l'invention se rapporte à un support d'enregistrement lisible par un ordinateur sur lequel est enregistré un programme d'ordinateur comprenant des instructions pour l'exécution des étapes du procédé selon le premier aspect ou selon le deuxième aspect.

Le support d'informations peut être n'importe quelle entité ou n'importe quel dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. D'autre part, le support d'informations peut être un support transmissible tel qu'un signal électrique ou optique, qui peut être acheminé par un câble électrique ou optique, par radio ou par d'autres moyens. Le programme selon l'invention peut être en particulier téléchargé sur un réseau Internet ou Intranet. Alternativement, le support d'informations peut être un circuit intégré dans lequel le programme est incorporé, le circuit étant adapté pour exécuter ou pour être utilisé dans l'exécution du procédé en question.

### BREVE DESCRIPTION DES FIGURES

L'invention sera bien comprise à l'aide de la description qui suit de modes particuliers de réalisation de l'invention donnés à titre d'exemples non limitatifs et représentés sur les dessins annexés, dans lesquels :
La Figure 1 est un schéma d'un système, selon un mode de réalisation de l'invention, de gestion et de configuration d'un parc d'automates industriels, déployés dans un site industriel ;
La Figure 2 est un schéma d'un dispositif d'accueil, selon un mode de réalisation de l'invention, pour un robot industriel, apte à être installé à une station dans un site industriel ;
La Figure 3 est un schéma d'un robot mobile, selon un mode de réalisation de l'invention ;
La Figure 4 est un schéma d'un robot industriel, selon un mode de réalisation de l'invention ;
La Figure 5 est un synoptique des étapes d'un procédé, selon un mode de réalisation de l'invention, de gestion du positionnement d'un parc de robots industriels, dans un site industriel ;
La Figure 6 est un synoptique des étapes d'un procédé, selon un mode de réalisation de l'invention, de configuration automatisée d'un robot industriel.

### DESCRIPTION DÉTAILLÉE DE MODES DE RÉALISATION

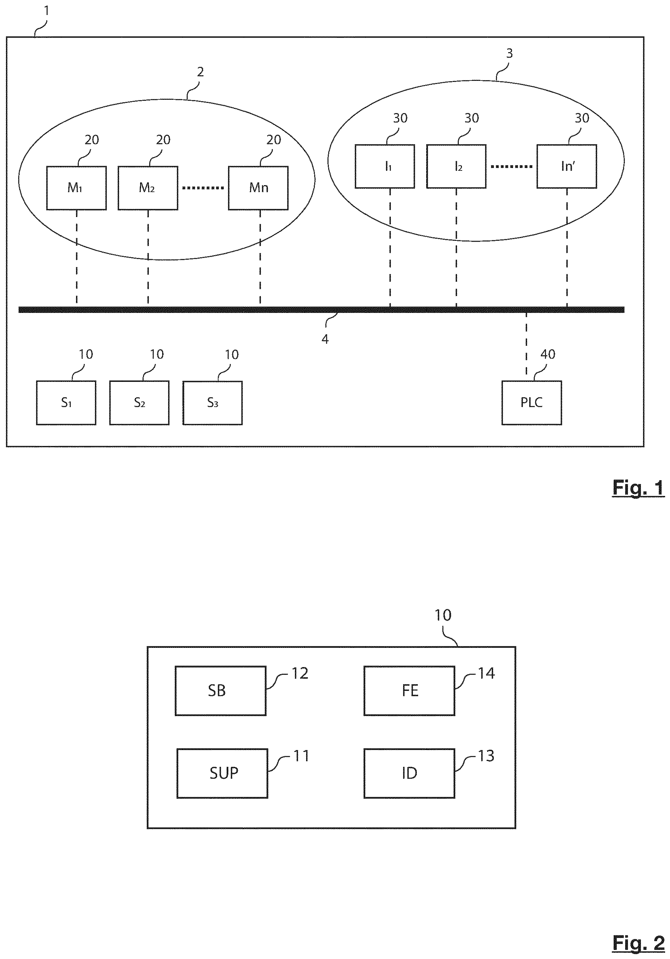

En référence à la figure 1, dans un mode de réalisation, un système 1 de gestion et de configuration d'un parc d'automates est déployé dans un site industriel, typiquement un site industriel de production d'objets manufacturés - de type atelier ou usine notamment - et comportant des lignes de production et/ou des ateliers en partie ou totalement automatisés. Le système 1 comporte un parc 2 de robots mobiles 20, un parc 3 de robots industriels 30, ainsi qu'un module automate 40. Le système 1 comporte encore un réseau de communication 4 apte à permettre le couplage des robots mobiles 20 du parc 2 et des robots industriels 30 du parc 3 au module automate 40. Le système 1 comporte en outre un ou plusieurs dispositifs d'accueil 10, destinés à être installés dans le site industriel à des stations sur lesquels des robots industriels 30 sont susceptibles d'être déployés et mis en œuvre.

En référence à la figure 2, un mode de réalisation du dispositif d'accueil 10 va maintenant être décrit. Le dispositif d'accueil 10 comporte un support 11 arrangé de sorte à permettre l'accueil d'au moins un des robots industriels 30 du parc 3 et le maintien dudit robot industriel 30 dans une position adaptée à la réalisation des tâches susceptibles d'être assignées audit robot industriel 30 dans la station correspondante. Le support 11 peut par exemple comprendre une structure mécanique sur laquelle peut reposer le robot industriel 30 dans une position adaptée. Le dispositif d'accueil 10 est arrangé de sorte à transmettre un signal S_{D} de démarrage au robot industriel 30 lorsque ledit robot industriel 30 est positionné dans le dispositif d'accueil 10.

Le dispositif d'accueil 10 comporte un système de bridage 12 susceptible d'être dans un état dit engagé ou dans un état dit libre. Lorsque le système de bridage 12 est dans l'état libre, si un des robots industriels 30 est disposé sur le support 11, alors le robot industriel 30 peut être déplacé hors du support 11, sans entraves du système de bridage 12. Alternativement, lorsque le système de bridage 12 est dans l'état libre, si aucun des robots industriels 30 n'est disposé sur le support 11, alors un des robots industriels 30 peut être déposé sur le support 11, sans entraves du système de bridage 12. Lorsque le système de bridage 12 est dans l'état engagé, et qu'un des robots industriels 30 est disposé sur le support 11, alors le système de bridage 12 coopère avec le robot industriel 30 de sorte à maintenir fixement ce dernier sur le support 11. Le système de bridage 12 vise ainsi à s'assurer, qu'une fois déposé sur le support 11, le robot industriel 30 soit maintenu correctement dans la position souhaitée, sans toutefois limiter les opérations du robot industriel 30. Dans un mode de réalisation, lorsque le système de bridage 12 est dans l'état engagé, et qu'un des robots industriels 30 est couplé au support 11, le système de bridage peut être est arrangé de sorte à permettre la transmission du signal S_{D} de démarrage au robot industriel 30.

Le dispositif d'accueil 10 comporte encore un dispositif d'identification 13 pour permettre d'identifier le dispositif d'accueil. Plus particulièrement, le dispositif d'identification 13 est configuré de manière à permettre aux robots mobiles 20 et aux robots industriels 30 d'identifier le dispositif d'accueil 10. Le dispositif d'identification 13 peut notamment inclure un ou plusieurs des moyens de la liste non exhaustive suivante : un émetteur de signal optique, un support comportant un symbole optique - par exemple un code-barres ou un numéro d'identification, un émetteur de signal électromagnétique, un transpondeur, un marquage mécanique, un émetteur de signal sonore.

Le dispositif d'accueil 10 comporte également un dispositif de fourniture d'énergie 14 apte notamment à fournir de l'énergie - par exemple sous la forme d'un courant électrique - à un des robots industriels 30, lorsque ce dernier est disposé sur le support 11, de sorte que ledit robot industriel 30 puisse charger un dispositif de stockage d'énergie et/ou utiliser directement l'énergie pour les besoins de son fonctionnement. Dans un mode de réalisation, le dispositif de fourniture d'énergie 14 peut être configuré pour transmettre un signal S_{D} de démarrage au robot industriel 30, par exemple sous la forme d'un signal électrique de tension fixe prédéterminée, par exemple un signal de tension continue de 24V.

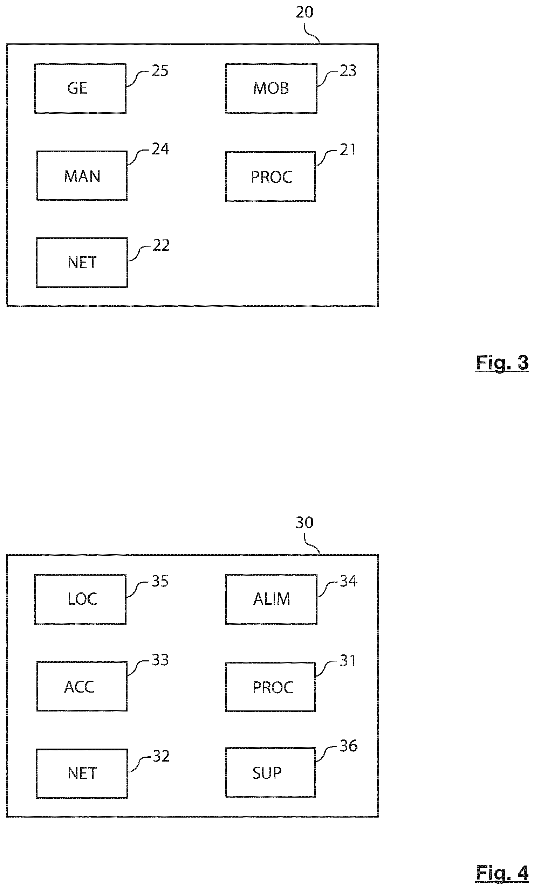

En référence à la figure 3, un mode de réalisation du robot mobile 20 va maintenant être décrit. Le robot mobile 20 est un automate apte à recevoir et exécuter des requêtes de transport d'objet(s) au sein du site industriel. Ainsi le robot mobile 20 dispose de capacités de manutention, et peut par exemple transporter, de manière autonome ou semi-autonome, des cartons et/ou des palettes, d'un emplacement d'origine vers un emplacement de destination. Le robot mobile 20 est également apte à recevoir depuis le réseau de communication 4, et exécuter une requête de transport d'un des robots industriels 30 du parc 3, entre un emplacement initial sur lequel se trouve ledit robot industriel, vers un emplacement de destination, typiquement un des dispositifs d'accueil 10 installés sur le site industriel.

Le robot mobile 20 comporte une unité de traitement 21, adaptée notamment à mettre en œuvre des instructions pour l'exécution d'un programme d'ordinateur. L'unité de traitement 21 permet en outre de recevoir et traiter des informations en vue de recevoir des commandes, réaliser des fonctions assignées au robot mobile 20, transmettre des informations relatives au robot mobile 20 et à son environnement, en particulier la position du robot mobile 20 dans le site industriel. L'unité de traitement 21 est apte à coopérer avec une interface de communication 22, adaptée à être couplée au réseau de communication 4, de sorte à permettre la réception d'informations transmises par des entités couplées au réseau de communication 4 et l'envoi d'informations vers des entités couplées au réseau de communication 4. L'interface de communication 4 est par exemple une interface de communication sans fil pour permettre d'accroître la mobilité du robot mobile 20.

Le robot mobile 20 comporte un dispositif moteur 23 apte à mettre en mouvement, de manière contrôlée, le robot mobile pour la réalisation de courses entre différents emplacements du site industriel. Le dispositif moteur 23 peut ainsi être piloté pour l'unité de traitement 21, de sorte à réaliser des déplacements entre différents emplacements du site industriel.

Le robot mobile 20 comporte un dispositif de manutention 24 apte à coupler/découpler mécaniquement un objet - et plus particulièrement un des robots industriels 30 du parc 3 - au robot mobile 20. Le dispositif de manutention 24 peut par exemple comporter un plateau dont les dimensions permettent à un des robots industriels d'être soutenu convenablement en vue d'un transport, et par la suite déposer sur un des dispositifs d'accueil 10. Le dispositif de manutention 24 peut encore comporter des moyens de guidage - par exemple des rails - et/ou des moyens automatisés de chargement pour permettre d'aider et/ou réaliser de manière autonome le chargement d'un des robots industriels 30.

Le robot mobile 20 comporte un dispositif de gestion de l'énergie 25, apte à fournir notamment de l'énergie à l'unité de traitement 21, à l'interface de communication 22, au dispositif moteur 23, et au dispositif de manutention 24. Le dispositif de gestion de l'énergie 25 est en outre configuré pour évaluer les ressources en énergie disponible, ainsi que pour mesurer la consommation énergétique. Le dispositif de gestion de l'énergie 25 peut également comprendre un dispositif de stockage d'énergie, par exemple un système de batteries électriques. L'évaluation du niveau de charge d'un système de batterie peut être réalisée par exemple en mesurant la tension délivrée par le système de batterie.

En référence à la figure 4, un mode de réalisation du robot industriel 30 va maintenant être décrit. Le robot industriel 30 est un automate apte à réaliser une séquence de tâches, une fois couplé à un des dispositifs d'accueil 10. Le robot industriel 30 peut par exemple réaliser une ou plusieurs des tâches de la liste non exhaustive suivante : saisie d'objets, déplacement d'objets, réalisation de mesures, brasage/soudage, perçage, mise en forme. Le robot industriel 30 est en outre arrangé de sorte à permettre son transport par un des robots mobiles 20 jusqu'à un des dispositifs d'accueil 10.

Le robot industriel 30 comporte une unité de traitement 31, adaptée notamment à mettre en œuvre des instructions pour l'exécution d'un programme d'ordinateur. L'unité de traitement 31 permet en outre de recevoir et traiter des informations en vue de recevoir des commandes, réaliser des fonctions assignées au robot industriel 30, transmettre des informations relatives au robot industriel 30 et à son environnement, en particulier la position du robot industriel 30 dans le site industriel. L'unité de traitement 31 est couplée ainsi à une interface de communication 32, adaptée à être couplée au réseau de communication 4, de sorte à permettre la réception d'informations transmises par des entités couplées au réseau de communication 4 et l'envoi d'informations vers des entités couplées au réseau de communication 4. L'interface de communication 4 est par exemple une interface de communication sans fil pour permettre d'accroître la mobilité du robot industriel 30.

Le robot industriel 30 comporte un dispositif effecteur 33 apte à réaliser des tâches. Le dispositif effecteur 33 peut par exemple être un bras robotique pourvu d'outils, tels une pince de serrage et/ou un outil de coupe. Le dispositif effecteur 33 est typiquement piloté par l'unité de traitement 31, de sorte à réaliser la séquence de tâches programmées et/ou demandées, en fonction de la station du site industriel occupée par le robot industriel 30. Typiquement, le robot industriel 30 est configuré de sorte que le dispositif effecteur 33 du robot industriel 30 réalise une première séquence S1 de tâches s'il est couplé au dispositif d'accueil 10 situé dans un premier emplacement E1 du site industriel, ou une deuxième séquence S2 de tâches s'il est couplé au dispositif d'accueil 10 situé dans un deuxième emplacement E2 du site industriel. Le dispositif effecteur 33 est par exemple monté solidairement par son socle sur un plateau 36 apte à être accueilli par le support 11 du dispositif d'accueil 10 et à coopérer avec le système de bridage 12 du dispositif d'accueil.

Le robot industriel 30 comporte un dispositif de stockage de l'énergie 34, apte à fournir notamment de l'énergie à l'unité de traitement 31, à l'interface de communication 32, et au dispositif effecteur 33. Le dispositif de stockage de l'énergie 34 permet au robot industriel 30 de disposer d'une source d'énergie autonome, et peut ainsi fonctionner sans nécessairement être couplé à une source d'énergie externe tant que le dispositif de stockage d'énergie présente un niveau de stockage suffisant. Le dispositif de stockage d'énergie 34 comporte par exemple un système de batteries électriques. Le dispositif de stockage de l'énergie 34 est en outre configuré pour évaluer les ressources en énergie disponible, ainsi que pour mesurer la consommation énergétique. L'évaluation du niveau de charge d'un système de batterie peut être réalisée par exemple en mesurant la tension délivrée par le système de batterie.

Le robot industriel 30 comporte encore un dispositif de localisation 35, apte à coopérer avec le dispositif d'identification 13 du dispositif d'accueil 10. Lorsque le robot industriel est couplé au dispositif d'accueil 10, le dispositif de localisation 35 est configuré pour déterminer le dispositif d'accueil accueillant le robot industriel et/ou à la station du site industriel sur laquelle le dispositif d'accueil est disposé. Le dispositif de localisation 35 peut notamment inclure un des moyens de la liste suivante ou une combinaison desdits moyens : un lecteur de signes optiques ou symbole optique, un lecteur de code-barres ou de numéro d'identification, une caméra, un système de réception électromagnétique, un module de communication, un palpeur mécanique, un système de captation et traitement audio.

L'unité de traitement 31 est en outre configurée pour exécuter automatiquement les instructions d'un programme principal, lorsque le robot industriel 30 reçoit le signal S_{D} de démarrage, de sorte que le robot industriel soit dans un état initial dans lequel le dispositif de localisation 35 est apte à déterminer le dispositif d'accueil accueillant le robot industriel.

L'unité de traitement 31 est en outre configurée pour sélectionner et charger automatiquement un programme pour l'exécution d'une séquence de tâches à réaliser, parmi un ensemble de programmes pour l'exécution de séquences de tâches, en fonction de la détermination par le dispositif de localisation 35 du dispositif d'accueil 10 accueillant le robot industriel 30. Ainsi, il est possible d'adapter le fonctionnement du robot industriel, et en particulier la séquence de tâches à accomplir, selon la station occupée.

Le module automate 40 est couplé au réseau de communication 4, de sorte à pouvoir recevoir des informations et transmettre des commandes à l'ensemble des entités accessibles via le réseau de communication 4, et en particulier aux robots mobiles 20 et aux robots industriels 30. Le module automate 40 est notamment apte à coordonner les actions des robots mobiles 20 et des robots industriels 30, en fonction notamment de flux de données véhiculés par le réseau de communication 4, mises à jour constamment ou régulièrement, comprenant différentes informations relatives aux robots mobiles 20 et aux robots industriels 30, ainsi qu'à leur environnement, telles que le positionnement dans le site industriel des robots mobiles 20, la cadence de production des stations ainsi que le niveau d'énergie des différents robots mobiles 20 et robots industriels 30. Le module automate 40 peut encore comporter une interface utilisateur pour permettre à un opérateur de paramétrer le système selon l'invention, en particulier de permettre à un utilisateur de sélectionner et/ou saisir des informations pour décrire le positionnement souhaité pour chacun des robots industriels 30 du parc 3.

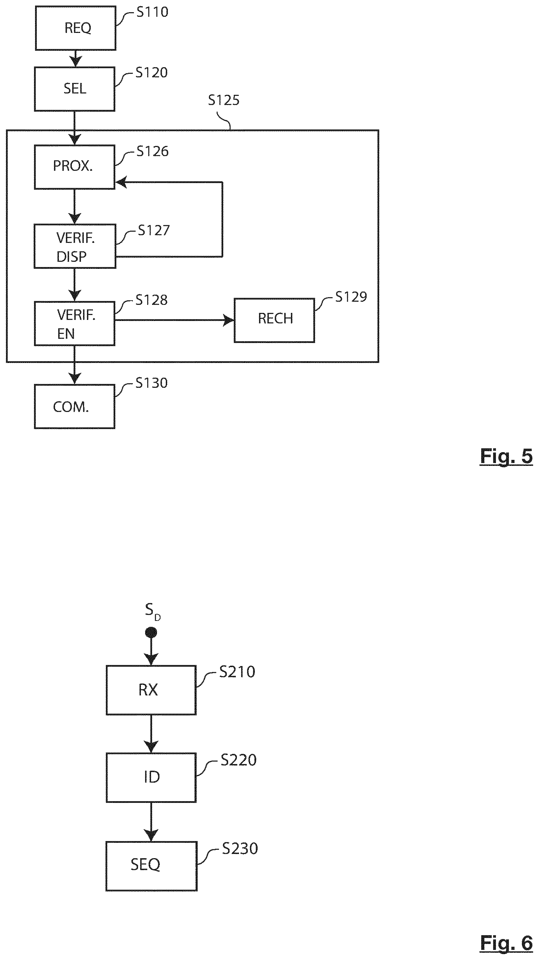

On se réfère désormais à la figure 5, représentant les étapes du procédé, selon un mode de réalisation de l'invention, susceptibles d'être mises en œuvre par le module automate 40 du système 1, de gestion du positionnement du parc 3 de robots industriels 30, dans un site industriel.

Au cours d'une étape S110, une requête REQ, comportant une information indiquant un besoin pour le déploiement, sur un des dispositifs d'accueil 10, d'un des robots industriels 30 du parc 3 est reçue. La requête REQ peut être reçue depuis le réseau de communication 4. Alternativement, la requête REQ peut être produite par le module automate 40 si ce dernier identifie un tel besoin, à partir par exemple des informations collectées depuis le réseau de communication 4 et/ou de son interface utilisateur. Les informations comprises dans la requête REQ permettent ainsi de déterminer le positionnement souhaité pour le robot industriel 30 sélectionné, et plus particulièrement le dispositif d'accueil 10 correspondant à ladite station.

Au cours d'une étape S120, on sélectionne un des robots industriels 30 du parc 3, disposant de ressources énergétiques supérieures ou égales à une quantité minimale nécessaire aux robots industriels 30 pour être déployé. La quantité minimale peut être prédéterminée, ou déterminée en fonction des tâches à réaliser. Dans le cas où le dispositif de stockage d'énergie 34 comporte un système de batterie, il est par exemple possible de comparer si la tension délivrée par le système de batteries est supérieure à un seuil minimum de tension. Il est en outre possible pour chaque robot industriel 30 du parc 3 ne remplissant pas ce critère de transmettre un ordre de recharge et/ou remplacement du dispositif de stockage de l'énergie 34.

Au cours d'une étape S125, on identifie le robot mobile 20, parmi les robots mobiles 20 du parc 2, étant à la fois le plus proche du robot industriel 30 sélectionné, disponible et disposant des ressources énergétiques nécessaires pour déplacer le robot industriel 30 sélectionné vers la station sélectionnée. Ainsi l'étape S125 peut comporter les sous-étapes suivantes :
- Au cours d'une sous-étape S126, on détermine le robot mobile 20, parmi les robots mobiles 20 du parc 2, le plus proche du robot industriel 30 sélectionné, en fonctionnement notamment des informations relatives au positionnement dans le site industriel de chacun des robots mobiles 20 du parc 2 ;
- Au cours d'une sous-étape S127, on détermine si le robot mobile 20 le plus proche du robot industriel 30, sélectionné au cours de l'étape S126, est disponible, c'est-à-dire s'il n'est pas déjà affecté à la réalisation d'une autre tâche, comme le transport d'une palette ; si le robot mobile 20 le plus proche n'est pas disponible, on met à nouveau en œuvre la sous-étape S126 en excluant le robot mobile 20 indisponible de la détermination du robot mobile 20 le plus proche ;

- si le robot mobile 20 le plus proche du robot industriel 30 est disponible, alors, au cours d'une sous-étape S127, on détermine, au cours d'une étape S128, si le robot mobile 20 disponible le plus proche du robot industriel 30 possède les ressources énergétiques nécessaires pour déplacer le robot industriel 30 sélectionné vers la station sélectionnée, par exemple en vérifiant si la tension délivrée par son système de batteries est supérieure à un seuil de tension minimum ; si tel n'est pas le cas, on peut transmettre un ordre de recharge et/ou remplacement du dispositif de gestion de l'énergie 25 du robot mobile 20 disponible le plus proche du robot industriel 30, et attendre que le robot mobile 20 disponible dispose à nouveau des ressources énergétiques nécessaires; alternativement, si tel n'est pas le cas, on peut mettre à nouveau en œuvre la sous-étape S126 en excluant le robot mobile 20 disponible ne disposant pas des ressources énergétiques nécessaires de la détermination du robot mobile 20 le plus proche ;
- si le robot mobile 20 disponible le plus proche du robot industriel 30 possède les ressources énergétiques nécessaires pour déplacer le robot industriel 30 sélectionné vers la station sélectionnée, alors on identifie alors ce dernier parmi les robots mobiles 20 du parc 2, comme destinataire de l'ordre transmis au cours de l'étape S130.

Au cours d'une étape S130, on transmet au robot mobile 20 identifié au cours de l'étape S125, un ordre pour déplacer le robot industriel 30 sélectionné vers le dispositif d'accueil 10 de destination.

On se réfère désormais à la figure 6, représentant les étapes du procédé, selon un mode de réalisation de l'invention, de configuration d'un robot industriel 30. Le procédé est notamment mis en œuvre lors du couplage du robot industriel 30 concerné à un des dispositifs d'accueil 10, suite à l'exécution de l'ordre produit au cours de l'étape 140 du procédé décrit à la figure 5.

Au cours d'une étape S210, un signal S_{D} de démarrage, transmis par un dispositif d'accueil 10, est reçu.

Au cours d'une étape S220, on détermine un identifiant propre au dispositif d'accueil 10 ayant transmis le signal S_{D} de démarrage.

Au cours d'une étape S230, on sélectionne et on charge un programme pour l'exécution d'une séquence de tâches à réaliser, parmi un ensemble de programmes pour l'exécution de séquences de tâches, en fonction de l'identifiant propre au dispositif d'accueil 10.

Le programme ainsi chargé par le robot industriel 30, choisi selon la station dans laquelle ledit robot industriel a été déployé, peut ainsi être immédiatement ou ultérieurement être exécuté, pour réaliser la séquence de tâches adaptées.

## Revendications

1. Procédé de gestion du positionnement d'un parc (3) de robots industriels (30), dans un site industriel comportant un ensemble de dispositifs d'accueil (10) répartis sur une pluralité de stations, chaque dispositif d'accueil étant arrangé de sorte à permettre l'accueil d'un des robots industriels (30) du parc (3) et le maintien dudit robot industriel (30) dans une position adaptée à la réalisation des tâches susceptibles d'être assignées audit robot industriel (30) dans la station correspondante, chaque robot industriel (30) comportant un dispositif de stockage de l'énergie (34) apte à fournir de manière autonome l'énergie nécessaire au fonctionnement nominal dudit robot industriel (30), le procédé comportant :
• une première étape (S110) de réception d'une requête (REQ), comportant une information indiquant un besoin pour le déploiement, sur un des dispositifs d'accueil (10) de destination, d'un des robots industriels (30) parmi les robots industriels (30) du parc (3) ;
le procédé étant **caractérisé en ce qu'**il comporte en outre les étapes suivantes :
• une deuxième étape (S120) de sélection d'un des robots industriels (30) du parc (3), dont le dispositif de stockage d'énergie (34) dispose de ressources énergétiques propres supérieures ou égale à une quantité minimale nécessaire aux robots industriels (30) pour être déployé ;
• une troisième étape (S130) de transmission, à un robot mobile (20) présent dans le site industriel, d'un ordre pour déplacer le robot industriel (30) sélectionné vers le dispositif d'accueil (10) de destination.

2. Procédé selon la revendication 1, dans lequel une pluralité de robots mobiles (20) est présente dans le site industriel, et dans lequel, on identifie, au cours d'une étape (S125) d'identification, parmi la pluralité de robots mobiles (20), un desdits robots mobiles (20) étant à la fois le plus proche du robot industriel (30) sélectionné au cours de la deuxième étape (S120), disponible et disposant des ressources énergétiques nécessaires pour déplacer le robot industriel (30) sélectionné vers le dispositif d'accueil (20) de destination identifié au cours de la première étape (S110) ; l'ordre pour déplacer le robot industriel (30) sélectionné vers le dispositif d'accueil (20) de destination étant alors transmis au cours de la troisième étape (S130) audit robot mobile (20) identifié au cours de l'étape (S125) d'identification.

3. Procédé selon la revendication 2, dans lequel, au cours de l'étape d'identification (S125), on identifie les robots mobiles (20) ne disposant pas des ressources énergétiques nécessaires pour déplacer le robot industriel (30) sélectionné vers le dispositif d'accueil (20) de destination, puis on transmet auxdits robots mobiles (20) un ordre de recharge et/ou de maintenance.

4. Procédé selon l'une quelconque des revendications 1 à 3, dans lequel, au cours de la deuxième étape, on identifie les robots industriels (30) du parc (3) dont le dispositif de stockage d'énergie (34) dispose de ressources énergétiques propres inférieures à la quantité minimale, puis on transmet auxdits robots industriels (30) un ordre de recharge et/ou une demande de remplacement du dispositif de stockage de l'énergie (34).

5. Procédé de configuration automatisée d'un robot industriel (30), apte à coopérer avec un dispositif d'accueil (10) installé à une station d'un site industriel, chaque dispositif d'accueil étant arrangé de sorte à permettre l'accueil du robot industriel (30) et le maintien dudit robot industriel (30) dans une position adaptée à la réalisation des tâches susceptible d'être assignées audit robot industriel (30) dans la station correspondante, chaque robot industriel (30) comportant un dispositif de stockage de l'énergie (34) apte à fournir de manière autonome l'énergie nécessaire au fonctionnement nominal dudit robot industriel (30), **caractérisé en ce qu'**il comporte les étapes suivantes :
• une première étape (S210) de réception d'un signal (S_{D}) de démarrage, transmis par un dispositif d'accueil (10) ;
• une deuxième étape (S220) de détermination d'un identifiant propre au dispositif d'accueil (10) ayant transmis le signal S_{D} de démarrage ;
• une troisième étape (S230) de sélection et de chargement d'un programme pour l'exécution d'une séquence de tâches à réaliser, parmi un ensemble de programmes pour l'exécution de séquences de tâches, en fonction de l'identifiant propre au dispositif d'accueil (10) ;

6. Module automate (40) pour gérer le positionnement d'un parc (3) de robots industriels (30), dans un site industriel comportant un ensemble de dispositifs d'accueil (10) répartis sur une pluralité de stations, chaque dispositif d'accueil étant arrangé de sorte à permettre l'accueil d'un des robots industriels (30) du parc (3) et le maintien dudit robot industriel (30) dans une position adaptée à la réalisation des tâches susceptibles d'être assignées audit robot industriel (30) dans la station correspondante, chaque robot industriel (30) comportant un dispositif de stockage de l'énergie (34) apte à fournir de manière autonome l'énergie nécessaire au fonctionnement nominal dudit robot industriel (30), **caractérisé en ce qu'**il est configuré pour :
• recevoir (S110) une requête (REQ), comportant une information indiquant un besoin pour le déploiement, sur un des dispositifs d'accueil (20) de destination, d'un des robots industriels (30) parmi les robots industriels (30) du parc (3) ;
• sélectionner (S120) un des robots industriels (30) du parc (3), dont le dispositif de stockage d'énergie (34) dispose de ressources énergétiques propres supérieures ou égale à une quantité minimale nécessaire aux robots industriels (30) pour être déployé ;
• transmettre (S130), à un robot mobile (20) présent dans le site industriel, un ordre pour déplacer le robot industriel (30) sélectionné vers le dispositif d'accueil (10) de destination.

7. Module selon la revendication 6, configuré pour identifier, parmi une pluralité de robots mobiles (20) présents dans le site industriel, un desdits robots mobiles (20) étant à la fois le plus proche du robot industriel (30) sélectionné, disponible et disposant des ressources énergétiques nécessaires pour déplacer le robot industriel (30) sélectionné vers le dispositif d'accueil (20) de destination identifié ; le module étant configuré pour transmettre l'ordre pour déplacer le robot industriel (30) sélectionné vers le dispositif d'accueil (20) de destination, audit robot mobile (20) ainsi identifié.

8. Module selon la revendication 7, configuré pour identifier les robots mobiles (20) ne disposant pas des ressources énergétiques nécessaires pour déplacer le robot industriel (30) sélectionné vers le dispositif d'accueil (20) de destination, et pour transmettre auxdits robots mobiles (20) un ordre de recharge et/ou de maintenance.

9. Module selon l'une quelconque des revendications 6 à 8, configuré pour identifier les robots industriels (30) du parc (3) dont le dispositif de stockage d'énergie (34) dispose de ressources énergétiques propres inférieures à la quantité minimale, et pour transmettre auxdits robots industriels (30) un ordre de recharge et/ou une demande de remplacement du dispositif de stockage de l'énergie (34).

10. Robot industriel (30), apte à coopérer avec un dispositif d'accueil (10) installé à une station d'un site industriel, chaque dispositif d'accueil étant arrangé de sorte à permettre l'accueil du robot industriel (30) et le maintien dudit robot industriel (30) dans une position adaptée à la réalisation de tâches susceptibles d'être assignées au robot industriel (30) dans la station correspondante, comportant un dispositif de stockage de l'énergie (34) apte à fournir de manière autonome l'énergie nécessaire au fonctionnement nominal du robot industriel (30), **caractérisé en ce que** le robot industriel est configuré pour :
• recevoir (S210) un signal (S_{D}) de démarrage, transmis par un dispositif d'accueil (10) ;
• déterminer (S220) un identifiant propre au dispositif d'accueil (10) ayant transmis le signal (S_{D}) de démarrage ;
• sélectionner et de charger (S230) un programme pour l'exécution d'une séquence de tâches à réaliser, parmi un ensemble de programmes pour l'exécution de séquences de tâches, en fonction de l'identifiant propre au dispositif d'accueil (10).

11. Système (1) comportant au moins un module automate (40) selon l'une quelconque des revendications 6 à 9, et au moins un robot industriel (30) selon la revendication 10.

12. Programme d'ordinateur comportant des instructions pour l'exécution des étapes d'un des procédés selon l'une quelconque des revendications 1 à 5, lorsque ledit programme est exécuté par un processeur.

13. Support d'enregistrement lisible par un ordinateur sur lequel est enregistré un programme d'ordinateur comprenant des instructions pour l'exécution des étapes des procédés selon l'une quelconque des revendications 1 à 5.
